# EUROPÄISCHE PATENTSCHRIFT

(11) **EP 1 690 000 B1**
(45) Veröffentlichungstag und Bekanntmachung des Hinweises auf die Patenterteilung: **18.07.2007**
(21) Anmeldenummer: 04791309.0
(22) Anmeldetag: 25.10.2004
(51) Int. Cl.: F02M 47/02, F02M 61/16, F16J 15/16

(54) **INJEKTOR**
INJECTOR
INJECTEUR

(30) Priorität: 03.11.2003 DE 10351159; 27.03.2004 DE 102004015133
(43) Veröffentlichungstag der Anmeldung: 16.08.2006
(73) Patentinhaber: ROBERT BOSCH GMBH, 70442 Stuttgart (DE)
(72) Erfinder: HEDRICH, Adrian, 70567 Stuttgart (DE)
(86) Internationale Anmeldenummer: PCT/EP2004/052659
(87) Internationale Veröffentlichungsnummer: WO 2005/042963

(56) Entgegenhaltungen:
- DE-A- 10 020 870
- DE-A- 19 729 392
- GB-A- 1 122 691
- US-A- 5 129 658
- US-A- 5 342 066

## Beschreibung

Die Erfindung betrifft einen Injektor für ein Common-Rail-Einspritzsystem mit den im Oberbegriff des Anspruchs 1 angegebenen Merkmalen.

### Stand der Technik

Common-Rail-Einspritzsysteme weisen eine Mehrzahl von Injektoren auf, die unter der Kontrolle einer elektronischen Motorsteuerung von einer Hochdruckpumpe aus einem als Common-Rail bezeichneten zentralen Hochdruckspeicher mit Kraftstoff gespeist werden und den Kraftstoff in die Brennräume der Verbrennungsmaschine einspritzen.

Aus der DE 100 20 870 A1 der Anmelderin ist bereits ein Common-Rail-Injektor bekannt, dessen Injektorgehäuse ein Ventilstück beherbergt, das in eine Stufenbohrung des Injektorgehäuses eingesetzt und in Bezug zum Injektorgehäuse mittels eines weichen Dichtrings abgedichtet ist, der als Dichtung zwischen einem Hochdruckbereich und einem Niederdruckbereich des Injektors dient. Der Dichtring ist in einen Ringraum oberhalb von einer Ringschulter der Stufenbohrung eingesetzt und stützt sich gegen die Ringschulter ab. Um zu verhindern, dass der Dichtring durch die im Hochdruckbereich oberhalb des Dichtrings herrschenden wechselnden Drücke des Kraftstoffs von bis zu 1900 bar in einen unterhalb der Ringschulter angeordneten engen Ringspalt zwischen dem Ventilstück und dem Injektorgehäuse gepresst bzw. extrudiert wird, ist zwischen dem Dichtring und der Ringschulter ein metallischer Stützring angeordnet. Da bei den genannten Drücken eine vollkommene Dichtigkeit des Dichtrings nicht gewährleistet werden kann, ist der Stützring an seiner der Ringschulter zugewandten Unterseite mit insgesamt vier flachen Leckage- oder Entlastungsnuten versehen, die eine definierte Undichtigkeit zwischen dem Stützring und dem Injektorgehäuse liefern, um einen am Dichtring vorbeitretenden Leckagestrom abzuführen und so den Aufbau eines Druckpolsters unterhalb des Dichtrings zu vermeiden, das zu einer unerwünschten axialen Verschiebung des Dichtrings führen könnte.

Da der Stützring bei gegenwärtig von der Anmelderin serienmäßig hergestellten Injektoren für Common-Rail-Einspritzsysteme zudem mit seinem äußeren Umfangsrand dichtend gegen die benachbarte Innenwand der Stufenbohrung anliegt, weist er darüber hinaus in axialer Richtung angrenzend an jede Entlastungsnut eine in seinem äußeren Umfangsrand ausgesparte sichelförmige Einbuchtung auf, die einen Hindurchtritt des Leckagestroms zwischen dem äußeren Umfangsrand des Stützrings und der benachbarten Innenwand der Stufenbohrung in die Entlastungsnuten ermöglichen soll. Mit einer solchen Anordnung könnte es jedoch zu einer ungewollten Extrusion des Dichtringwerkstoffs durch die Aussparungen und die Entlastungsnuten kommen, wodurch die Dichtfunktion des Dichtrings nicht mehr gewährleistet wäre und infolgedessen ein Ausfall des gesamten Einspritzsystems verursacht werden könnte.

### Vorteile der Erfindung

Der erfindungsgemäße Injektor mit den im Anspruch 1 genannten Merkmalen bietet demgegenüber den Vorteil, dass der vorhandene kurze Weg durch die Aussparungen und Entlastungsnuten infolge des Versatzes der Aussparungen und Entlastungsnuten verlängert wird, wodurch die Reibkräfte erheblich vergrößert werden, die einer Extrusion des Dichtringwerkstoffs durch die Aussparungen und Entlastungsnuten entgegengesetzt werden. Mit anderen Worten wird der vorhandene direkte Weg versperrt und eine Umleitung geschaffen, was in Verbindung mit den kleinen Durchlassquerschnitten im Bereich der Umleitung, d.h. zwischen einer Aussparung und der benachbarten Entlastungsnut, einer Extrusion des Dichtringwerkstoffs entgegenwirkt. Dabei bleibt der Hindurchtritt des Leckagestroms weiterhin gewährleistet, wobei zugleich dessen Strömungsgeschwindigkeit durch die in Umfangsrichtung versetzte Anordnung der Entlastungsnuten und Aussparungen in vorteilhafter Weise verringert wird. Daneben besitzt der erfindungsgemäße Injektor einen Stützring mit robusterer Konstruktion, da die von den Entlastungsnuten und den Aussparungen gebildeten Schwächungszonen nicht zusammenfallen und übermäßige Bewegungen im Bereich der Aussparungen vermieden werden, die vermutlich eine der Ursachen für eine Extrusion des Dichtringwerkstoffs sind.

Durch die erfindungsgemäße Anordnung der Aussparungen und Entlastungsnuten weist der Stützring im Bereich der Aussparungen eine Materialstärke auf, die im Vergleich zum Stand der Technik um die Nuttiefe der Entlastungsnuten größer ist. Dadurch rücken die Unterkanten der Aussparungen näher an die Gehäusewand des Injektors heran, was wiederum in diesem Bereich kleinere Spaltquerschnitte zur Folge hat, die einer Extrusion entgegenwirken.

In bevorzugter Ausgestaltung der Erfindung ist vorgesehen, dass die Entlastungsnuten und die Aussparungen derart gegeneinander versetzt sind, dass jeweils eine Aussparung zwischen zwei in Umfangsrichtung benachbarten Entlastungsnuten angeordnet ist, während umgekehrt jeweils eine Entlastungsnut zwischen zwei in Umfangsrichtung benachbarten Aussparungen angeordnet ist, in beiden Fällen vorzugsweise in der Mitte.

Eine weitere bevorzugte Ausgestaltung der Erfindung sieht vor, dass der Stützring wie bisher insgesamt vier in Umfangsrichtung im Abstand von 90 Grad angeordnete Aussparungen und vier in Umfangsrichtung ebenfalls im Abstand von 90 Grad angeordnete Entlastungsnuten aufweist, um für einen ausreichenden Durchlassquerschnitt für den Leckagestrom zu sorgen, dass jedoch die Entlastungsnuten im Winkelabstand von 45 Grad von den Aussparungen angeordnet sind, und umgekehrt, um möglichst lange Umleitungen zwischen benachbarten Entlastungsnuten und Aussparungen zu schaffen.

Die bevorzugt in Form von gerundeten Sicken in den Stützring eingeprägten Entlastungsnuten weisen zweckmäßig eine Tiefe von 0,05 bis 0,1 mm auf, während die Aussparungen zweckmäßig einen sichelförmigen Querschnitt und eine Tiefe von 0,12 bis 0,17 mm aufweisen und aus dem Stützring ausgestanzt sind.

Gemäß einer weiteren bevorzugten Ausgestaltung der Erfindung sind darüber hinaus die Querschnittsform der Ringschulter der Stufenbohrung und die Querschnittsform des Stützrings derart aneinander angepasst, dass der Stützring zwischen den Aussparungen mit seinem äußeren Umfangsrand im Wesentlichen dichtend gegen einen oberhalb der Ringschulter gelegenen Teil der Innenwand der Stufenbohrung anliegt und zwischen den Entlastungsnuten mit Teilen seiner Unterseite dichtend gegen die Ringschulter der Stufenbohrung anliegt. Diese dichtend gegen die Ringschulter anliegenden Teile der Unterseite grenzen vorzugsweise an das Ventilstück an und erstrecken sich nicht über die gesamte Breite des Stützrings, so dass radial auswärts von den dichtend anliegenden Teilen zwischen der Ringschulter und der Untersite des Stützrings in dessen Umfangsrichtung verlaufende Strömungskanäle mit kleinem Strömungsquerschnitt frei bleiben, die eine Verbindung zwischen den Aussparungen und den Entlastungsnuten herstellen. Die Strömungskanäle sind vorzugsweise in der Unterseite des Stützrings ausgebildet, können jedoch auch als Ringnut in der Ringschulter ausgebildet sein. Der Strömungsquerschnitt dieser Strömungskanäle entspricht zweckmäßig im Wesentlichen demjenigen der Entlastungsnuten und der Aussparungen.

### Zeichnungen

Die Erfindung wird nachfolgend in einem Ausführungsbeispiel anhand der zugehörigen Zeichnungen näher erläutert. Es zeigen:
- Figur 1: eine teilweise weggeschnittene Längsschnittansicht durch einen erfindungsgemäßen Injektor mit Stützring;
- Figur 2: eine teilweise weggeschnittene Oberseitenansicht des Stützrings aus Figur 1;
- Figur 3: eine Querschnittsansicht des Stützrings entlang der Linie III-III aus Figur 2;
- Figur 4: eine Querschnittsansicht des Injektors entlang der Linie IV-IV aus Figur 1;
- Figur 5: eine Ausschnittsvergrößerung des Ausschnitts V aus Figur 1.

### Beschreibung des Ausführungsbeispiels

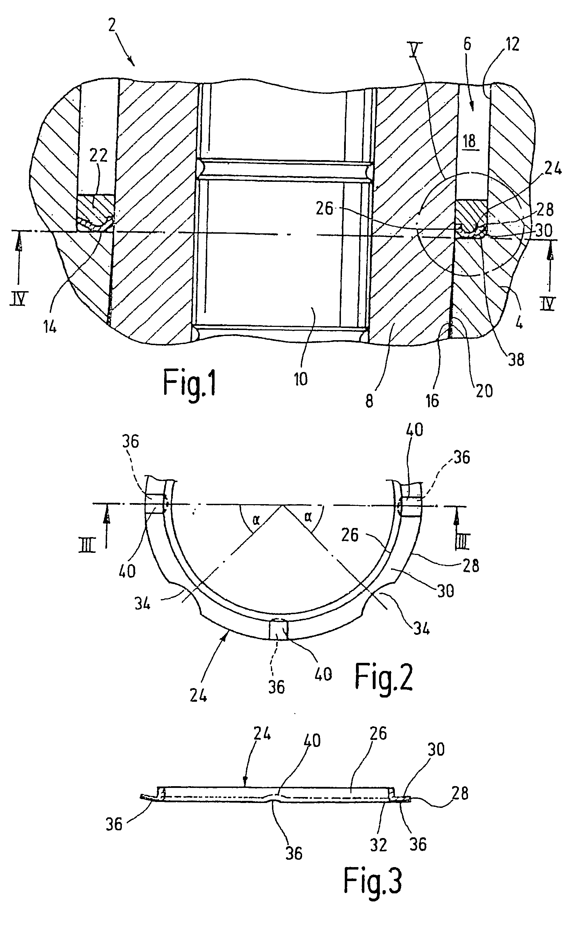

Der in Figur 1 der Zeichnung teilweise dargestellte Injektor 2 für ein Common-Rail-Einspritzsystem einer Verbrennungsmaschine dient dazu, Kraftstoff aus einem als Common-Rail bezeichneten zentralen Hochdruckspeicher in die Brennräume der Verbrennungsmaschine einzuspritzen.

Der vollständige Aufbau eines derartigen Injektors ist zum Beispiel in der DE 196 19 523 A1 und in der DE 102 20 457 A1 der Anmelderin ausführlich beschrieben und soll daher an dieser Stelle nicht näher erläutert werden.

Wie am besten in Figur 1 dargestellt, umfasst der Injektor 2 ein I n-jektorgehäuse 4 mit einer Stufenbohrung 6. In die Stufenbohrung 6 ist ein Ventilstück 8 eingesetzt, das als Führung für eine Steuerstange 10 dient, mit der die Öffnungs- und Schließbewegungen einer Düsennadel (nicht dargestellt) des Injektors 2 gesteuert werden können.

Die Stufenbohrung 6 weist einen erweiterten oberen Teil 12 auf, der durch eine Ringschulter 14 von einem verengten unteren Teil 16 getrennt ist. Der Innendurchmesser des erweiterten oberen Teils 12 der Stufenbohrung 6 ist größer als der Außendurchmesser des zylindrischen Ventilstücks 8, so dass dort um das Ventilstück 8 herum ein mit dem Hochdruckspeicher in Fluidverbindung stehender Ringraum 18 gebildet wird. Der Innendurchmesser des verengten unteren Teils 16 der Stufenbohrung 6 ist nur geringfügig größer als der Außendurchmesser des zylindrischen Ventilstücks 8, so dass dort um das Ventilstück 8 herum ein enger Dichtspalt 20 gebildet wird.

Um zu verhindern, dass Kraftstoff aus dem unter anderem vom Ringraum 18 gebildeten Hochdruckbereich über die Ringschulter 14 hinaus in einen unter anderem vom Spalt 20 gebildeten Niederdruckbereich gelangt, ist das untere Ende des Ringraums 18 durch einen Hochdruckdichtring 22 abgedichtet, der aus einer Mischung von Polytetraflourethylen (PTFE) und Bronzepulver besteht. Um zu verhindern, dass der Dichtring 22 infolge der im Ringraum 18 herrschenden wechselnden Drücke von bis zu etwa 1700 bar in den Dichtspalt 20 hinein extrudiert wird, ist unter dem Dichtring 22 ein Stützring 24 angeordnet, der sich auf der Ringschulter 14 abstützt.

Wie am besten in Figur 1, 3 und 5 dargestellt, weist der einstückig aus C60-Stahlblech hergestellte Stützring 24 eine abgewinkelte Querschnittsform auf, die aus einem im Presssitz gegen das Ventilstück 8 anliegenden kurzen inneren Stützringteil 26 und einem mit seinem äußeren Umfangsrand 28 im Presssitz gegen die Innenwand des erweiterten Teils 12 der Stufenbohrung 6 anliegenden äußeren Stützringteil 30 besteht, die durch einen gerundeten Übergang 32 verbunden sind.

Um zu verhindern, dass sich unterhalb des Dichtrings 22 ein Kraftstoffdruckpolster aufbaut, wenn Kraftstoff am Dichtring 22 vorbei nach unten gelangt, was dazu führen kann, dass der Dichtring 22 von der Ringschulter 15 weg nach oben verschoben wird und seine Dichtfunktion nicht mehr ordnungsgemäß erfüllt, sind im Stützring 24 Strömungskanäle vorgesehen, die einen Vorbeitritt geringer Mengen an Kraftstoff in den Dichtspalt 20 gestatten.

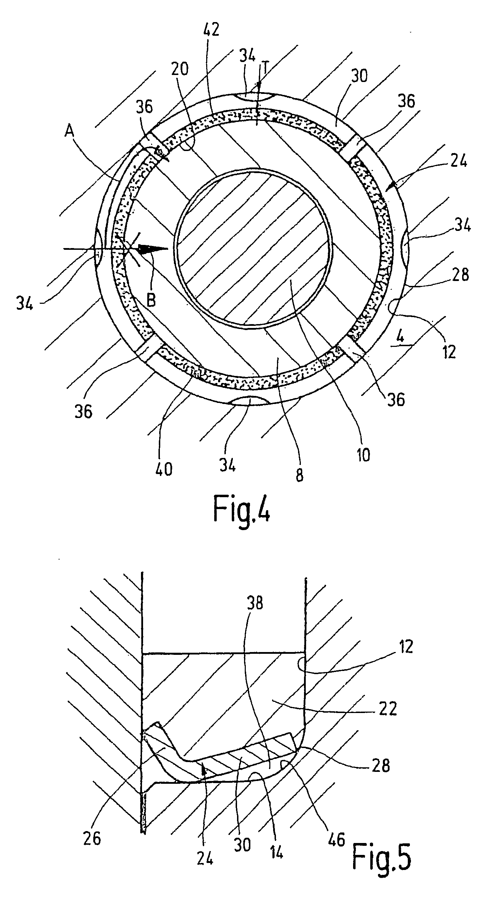

Diese Strömungskanäle bestehen aus vier sichelförmigen Aussparungen 34 im äußeren Umfangsrand des äußeren Stützringteils 30 und vier radialen Entlastungsnuten 36 in dessen Unterseite, die miteinander in Fluidverbindung stehen. Die Aussparungen 34 und die Entlastungsnuten 36 sind jeweils in gleichen Abständen von 90 Grad um den Umfang des Stützrings 24 herum angeordnet, sind jedoch in Umfangsrichtung um 45 Grad gegeneinander versetzt, um eine Extrusion des Dichtringmaterials durch die Strömungskanäle zu verhindern. Die Fluidverbindung zwischen den Aussparungen 34 und den jeweils benachbarten Entlastungsnuten 36 wird durch die am besten in Figur 5 dargestellte abgewinkelte Form des Stützrings 24 hergestellt. Dieser liegt nur im Bereich des Übergangs zwischen dem Stützringteil 26 und dem Stützringteil 30 gegen die Ringschulter 14 an, während die beiden Stützringteile 26 und 30 in Bezug zur Ringschulter 14 schräg ausgerichtet sind, wobei sich der äußere Stützringteil 30 mit seinem äußeren Umfangsrand 28 am oberen Ende eines aus Festigkeitsgründen zwischen dem oberen Teil 12 der Stufenbohrung 6 und der Ringschulter 14 vorgesehenen Übergangsradius 46 abstützt. Dadurch wird unterhalb des Stützringteils 30 ein ringförmiger Zwischenraum 38 gebildet, durch den Kraftstoff aus den Aussparungen 34 in die Entlastungsnuten 36 gelangen kann.

Die axialen Aussparungen 34 besitzen einen sichelförmigen Querschnitt mit einer maximalen Tiefe T (Figur 4) von etwa 0,12 bis 0,17 mm und werden bei der Herstellung des Stützrings 24 aus dem radialen Stützringteil 30 ausgestanzt.

Die radialen Entlastungsnuten 36 mit einer Tiefe von 0,05 bis 0,1 mm werden von Sicken 40 mit einem gerundeten Querschnitt gebildet, die bei der Herstellung des Stützrings 24 von unten her in den radialen Stützringteil 30 eingeprägt werden und sich über die gesamte Breite des Stützringteils 30 erstrecken (Figur 4).

Wie am besten in Figur 4 dargestellt, liegt der Stützring 24 jeweils zwischen den vier Aussparungen 34 mit seinem äußeren Umfangsrand 28 dichtend gegen die Innenwand des erweiterten Teils 12 der Stufenbohrung 6 an, während er zwischen den vier Entlastungsnuten 36 jeweils mit einem schattiert dargestellten, an das Ventilstück 8 angrenzenden inneren ringsegmentförmigen Teil 42 seiner Unterseite dichtend auf dem radial einwärts von der Ringnut 38 befindlichen Teil der Ringschulter 14 aufliegt.

Wie durch den Pfeil A in Figur 4 angedeutet, tritt der am Dichtring 22 vorbei nach unten bis zur Oberseite des Stützrings 24 gelangte Kraftstoffleckagestrom durch die Aussparungen 34 zwischen dem Stützring 24 und der Innenwand des erweiterten Teils 12 der Stufenbohrung 6 hindurch und strömt von dort in Umfangsrichtung durch die flache Ringnut 38 bis zu einer der beiden benachbarten Entlastungsnuten 36, durch welche er dann radial nach innen in den Spalt 20 zwischen dem Ventilstück 8 und dem Injektorgehäuse 4 gelangt, von wo er abgeführt wird. Der durch den Pfeil B angedeutete direkte kurze Weg nach innen ist versperrt, so dass infolge der Umleitung eine Extrusion des Dichtringwerkstoffs durch die Aussparungen 34 und Entlastungsnuten 36 hindurch sicher vermieden wird.

## Patentansprüche

1. Injektor für ein Common-Rail-Einspritzsystem einer Verbrennungsmaschine, mit einem Injektorgehäuse, einem im Injektorgehäuse angeordneten Ventilstück, einem als Dichtung zwischen einem Hochdruckbereich und einem Niederdruckbereich des Injektors dienenden Dichtring, sowie einem zusammen mit dem Dichtring in einem Ringraum zwischen dem Injektorgehäuse und dem Ventilstück angeordneten, zur Abstützung des Dichtrings dienenden Stützring, der in seiner vom Dichtring abgewandten Unterseite mit mehreren, in Umfangsrichtung im Abstand angeordneten Entlastungsnuten und in seinem äußeren Umfangsrand mit mehreren, in Umfangsrichtung im Abstand angeordneten Aussparungen versehen ist, **dadurch gekennzeichnet, dass** die Entlastungsnuten (36) und die Aussparungen (34) in Umfangsrichtung versetzt angeordnet sind.

2. Injektor nach Anspruch 1, **dadurch gekennzeichnet, dass** jeweils eine Aussparung (34) zwischen zwei in Umfangsrichtung benachbarten Entlastungsnuten (36) angeordnet ist.

3. Injektor nach Anspruch 2, **dadurch gekennzeichnet, dass** die Aussparung (34) in der Mitte zwischen den benachbarten Entlastungsnuten (36) angeordnet ist.

4. Injektor nach einem der vorangehenden Ansprüche, **dadurch gekennzeichnet, dass** jeweils eine Entlastungsnut (36) zwischen zwei in Umfangsrichtung benachbarten Aussparungen (34) angeordnet ist.

5. Injektor nach Anspruch 4, **dadurch gekennzeichnet, dass** die Entlastungsnut (36) in der Mitte zwischen den benachbarten Aussparungen (34) angeordnet ist.

6. Injektor nach einem der vorangehenden Ansprüche, **dadurch gekennzeichnet, dass** die Aussparungen (34) und die Entlastungsnuten (36) jeweils in gleichen Winkelabständen voneinander angeordnet sind.

7. Injektor nach einem der vorangehenden Ansprüche, **dadurch gekennzeichnet, dass** der Stützring vier Entlastungsnuten (36) und vier Aussparungen (34) aufweist, wobei die Aussparungen (34) im Abstand von 45 Grad von den Entlastungsnuten (36) angeordnet sind.

8. Injektor nach einem der vorangehenden Ansprüche, **dadurch gekennzeichnet, dass** der Stützring (24) aus einem im Wesentlichen axialen Stützringteil (26) und einen im Wesentlichen radialen Stützringteil (30) besteht, der in seiner vom Dichtring (22) abgewandten Unterseite mit den Entlastungsnuten (36) und in seinem äußeren Umfangsrand (28) mit den Aussparungen (34) versehen ist.

9. Injektor nach einem der vorangehenden Ansprüche, **dadurch gekennzeichnet, dass** sich der Stützring (24) gegen eine Ringschulter (14) des Injektorgehäuses (4) abstützt, deren Querschnittsform so an die Querschnittsform des Stützrings (24) angepasst ist, dass dieser oberhalb der Ringschulter (14) mit seinem äußeren Umfangsrand (28) zwischen den Aussparungen (34) im Wesentlichen dichtend gegen das Injektorgehäuse (4) anliegt und zwischen den Entlastungsnuten (36) mit Teilen (42) seiner Unterseite dichtend gegen die Ringschulter (14) anliegt, wobei die dichtend anliegenden Teile (42) dem Ventilstück (8) zugewandt sind und sich nicht über die gesamte Breite des Stützrings (24) erstrecken.

10. Common-Rail-Einspritzsystem, **gekennzeichnet durch** mindestens einen Injektor (2) nach einem der vorangehenden Ansprüche.

## Claims

1. Injector for a common-rail injection system of an internal combustion engine, with an injector housing, with a valve piece arranged in the injector housing, with a sealing ring serving as a seal between a highpressure region and a low-pressure region of the injector, and with a supporting ring which is arranged together with the sealing ring in an annular space between the injector housing and the valve piece and serves for supporting the sealing ring and which is provided in its underside facing away from the sealing ring with a plurality of relief grooves arranged at a distance from one another in the circumferential direction and in its outer circumferential edge with a plurality of clearances arranged at a distance from one another in the circumferential direction, **characterized in that** the relief grooves (36) and the clearances (34) are arranged so as to be offset in the circumferential direction.

2. Injector according to Claim 1, **characterized in that** in each case a clearance (34) is arranged between two relief grooves (36) which are adjacent in the circumferential direction.

3. Injector according to Claim 2, **characterized in that** the clearance (34) is arranged in the middle between the adjacent relief grooves (36).

4. Injector according to one of the preceding claims, **characterized in that** in each case a relief groove (36) is arranged between two clearances (34) which are adjacent in the circumferential direction.

5. Injector according to Claim 4, **characterized in that** the relief groove (36) is arranged in the middle between the adjacent clearances (34).

6. Injector according to one of the preceding claims, **characterized in that** the clearances (34) and the relief grooves (36) are arranged in each case at equal angular distances from one another.

7. Injector according to one of the preceding claims, **characterized in that** the supporting ring has four relief grooves (36) and four clearances (34), the clearances (34) being arranged at a distance of 45 degrees from the relief grooves (36).

8. Injector according to one of the preceding claims, **characterized in that** the supporting ring (24) consists of an essentially axial supporting-ring part (26) and of an essentially radial supporting-ring part (30) which is provided in its underside facing away from the sealing ring (22) with the relief grooves (36) and in its outer circumferential edge (28) with the clearances (34).

9. Injector according to one of the preceding claims, **characterized in that** the supporting ring (24) is supported against an annular shoulder (14) of the injector housing (4), the cross-sectional shape of the said annular shoulder being adapted to the cross-sectional shape of the supporting ring (24) such that the latter, above the annular shoulder (14), bears with its outer circumferential edge (28) essentially sealingly against the injector housing (4) between the clearances (34) and with parts (42) of its underside bears sealingly against the annular shoulder (14) between the relief grooves (36), the parts (42) which bear sealingly facing the valve piece (8) and not extending over the entire width of the supporting ring (24).

10. Common-rail injection system, **characterized by** at least one injector (2) according to one of the preceding claims.

## Revendications

1. Injecteur pour un système d'injection à rampe commune d'un moteur à combustion interne, comportant un boîtier d'injecteur, un élément de soupape logé dans le boîtier d'injecteur, une bague d'étanchéité servant de joint entre une zone haute pression et une zone basse pression de l'injecteur, ainsi qu'une bague d'appui servant à supporter la bague d'étanchéité, logée avec la bague d'étanchéité dans une zone annulaire entre le boîtier d'injecteur et l'élément de soupape, laquelle bague d'appui est pourvue, sur son côté inférieur opposé à la bague d'étanchéité, de plusieurs rainures de décharge écartées dans le sens périphérique, et, sur son bord périphérique extérieur, de plusieurs évidements espacés dans le sens périphérique,
**caractérisée en ce que**
les rainures de décharge (36) et les évidements (34) sont décalées dans le sens périphérique.

2. Injecteur selon la revendication 1,
**caractérisé en ce que**
chaque fois un évidement (34) est disposé entre deux rainures de (36) voisines dans le sens périphérique.

3. Injecteur selon la revendication 2,
**caractérisé en ce que**
l'évidement (34) est au milieu entre les rainures de décharge (36) voisines.

4. Injecteur selon l'une des revendications précédentes,
**caractérisé en ce que**
chaque fois une rainure de décharge (36) est disposée entre deux évidements (34) voisins dans le sens périphérique.

5. Injecteur selon la revendication 4,
**caractérisé en ce que**
la rainure de décharge (36) est au milieu entre les évidements (34) voisins.

6. Injecteur selon l'une des revendications précédentes,
**caractérisé en ce que**
les évidements (34) et les rainures de décharge (36) sont respectivement à une distance angulaire identique les uns des autres.

7. Injecteur selon l'une des revendications précédentes,
**caractérisé en ce que**
la bague d'appui présente quatre rainures de décharge (36) et quatre évidements (34), et les évidements (34) sont à 45 degrés des rainures de décharge (36).

8. Injecteur selon l'une des revendications précédentes,
**caractérisé en ce que**
la bague d'appui (24) est constituée d'une partie (26) essentiellement axiale et d'une partie (30) essentiellement radiale dont le côté inférieur opposé à la bague d'étanchéité (22), comporte les rainures de décharge (36), et dont le bord périphérique extérieur (28), comporte les évidements (34).

9. Injecteur selon l'une des revendications précédentes,
**caractérisé en ce que**
la bague d'appui (24) est supportée par un épaulement annulaire (14) du boîtier d'injecteur (4), dont la coupe est adaptée à la coupe de la bague d'appui (24) pour que cette dernière s'accole au-dessus de l'épaulement angulaire (14), avec son bord périphérique extérieur (28), de manière essentiellement étanche contre le boîtier d'injecteur (4) entre les évidements (34) et, avec des parties (42) de son côté inférieur, de manière étanche contre l'épaulement annulaire (14) entre les rainures de décharge (36), sachant que les parties (42) s'accolant de manière étanche sont tournées vers l'élément de soupape (8) et ne s'étendent pas sur toute la largeur de la bague d'appui (24).

10. Système d'injection à rampe commune,
**caractérisé par**
au moins un injecteur (2) selon l'une des revendications précédentes.
